# EUROPÄISCHE PATENTSCHRIFT

(11) **EP 0 345 452 B1**
(45) Veröffentlichungstag und Bekanntmachung des Hinweises auf die Patenterteilung: **01.06.1994**
(21) Anmeldenummer: 89107512.9
(22) Anmeldetag: 26.04.1989
(51) Int. Cl.: F16C 11/06

(54) **Verfahren zum Herstellen von Kugelgelenken**
Method of manufacturing ball joints
Procédé de fabrication de joints à rotule

(30) Priorität: 08.06.1988 DE 3819441
(43) Veröffentlichungstag der Anmeldung: 13.12.1989
(73) Patentinhaber: TRW Fahrwerksysteme GmbH & Co. KG, 40547 Düsseldorf (DE)
(72) Erfinder: Glatzel, Michael, D-4000 Düsseldorf (DE)
(74) Vertreter: Stenger, Watzke & Ring Patentanwälte

(56) Entgegenhaltungen:
- FR-A- 1 331 802
- GB-A- 2 092 663
- US-A- 3 571 881

## Beschreibung

Die Erfindung betrifft ein Verfahren zum Herstellen von Kugelgelenken, bei dem zwischen einem Kugelkopf und einem Gelenkgehäuse bzw. Verschlußteil eine ein Übermaß aufweisende Lagerschale aus einem thermoplastischen Kunststoff elastisch vorgespannt wird, und bei dem ein unmittelbar nach der Herstellung der Lagerschale vorhandenes ursprüngliches Übermaß zum Ausgleich von Maßtoleranzen bei auf dem Kugelkopf aufsitzender und in das Gelenkgehäuse eingesetzter Lagerschale in ein endgültiges Übermaß für den Zusammenbau des Kugelgelenkes geändert wird.

Aus der DE-C- 19 53 116 ist ein Verfahren bekannt, bei dem nockenartige Erhebungen an der Stirnseite einer Lagerschale aus Kunststoff beim Einwalzen der Lagerschale im Gelenkgehäuse mehr oder weniger stark verdrückt bzw. weggedrückt werden. Hierdurch soll die Lagerschale unabhängig von der Fertigungstoleranz des Gelenkgehäuses in Zapfenachsrichtung stets mit einem gewünschten gleichen Druck am Kugelkopf anliegen. Voraussetzung für dieses Verfahren sind jedoch winzige Erhebungen, die sich leicht verdrücken bzw. wegdrücken lassen. Andernfalls wäre nämlich die Vorspannung der Lagerschale auf den Kugelkopf unerwünscht hoch. Die winzigen Erhebungen können aber bei in Betrieb auftretenden hohen und insbesondere stoßförmigen Belastungen des Kugelgelenkes weiterverformt werden, wodurch sich die Vorspannung des Kugelkopfes ändert.

Aus dem Buch "Ultraschall in der Kunststoff-Fügetechnik" der Firma Herfurth GmbH, Hamburg, September 1979, Seiten 17 bis 20, ist es bekannt, Thermoplaste mittels Ultraschall zu schweißen, zu nieten oder Metallteile in diese einzubetten. Zur Durchführung dieses Verfahrens wird in einer sogenannten "Ultraschall-Anlage für die Kunstsstoffverarbeitung" ein magnetisches oder elektrisches Wechselfeld in einem Schallkopf in mechanische Schwingungen im Ultraschallbereich umgewandelt. Die axial gerichteten Schwingungen werden über eine sogenannte Sonotrode in das Werkstück eingekoppelt, wobei die Sonotrode ggfs. eine Amplitudenvergrößerung der Schwingungen bewirkt. Zur Übertragung der Ultraschall-Energie in das zu plastifizierende Werkstück muß dieses zwischen der Sonotrode und einer Werkstückauflage unter Druck stehen. Dann entsteht im Werkstück eine innere Reibung, die zu einer Erwärmung und plastischen Verformung des thermoplastischen Werkstoffes führt. Das Ausmaß der plastischen Verformung ist u.a. von Druck, Schwingungszeit, Schwingungsamplitude und Form der Sonotrode sowie von dem verwendeten Thermoplasten abhängig. Bei den bekannten Einsatzverfahren werden stets mehrere thermoplastische Teile miteinander verschweißt oder wird eine formschlüssige Verbindung hergestellt, indem ein thermoplastisches Teil mit einem Teil aus beliebigem Material vernietet oder in ein thermoplastisches Teil ein Metallteil eingebettet wird. Der Einsatz einer Ultraschall-Anlage für die Kunststoffverarbeitung bei der Herstellung von Kugelgelenken ist jedoch bislang nicht bekannt geworden, zumal die vorstehend angegebenen Einsatzverfahren bei der Herstellung von Kugelgelenken bedeutungslos sind.

Die DE-A- 32 11 925 offenbart ein Vibrationsreibschweißverfahren zum Verbinden zweier gemeinsam ein Lager bildender, aus thermoplastischem Kunststoff bestehender Gehäuseteile unter Einschluß eines von dem Lager beweglich gehaltenen Teils aus einem mit den Gehäuseteilen verschweißbaren Werkstoff. Bei dem Vibrationsreibschweißverfahren handelt es sich um ein Verfahren, bei dem die in der Fügeebene aufeinander gepressten Teile in Richtung dieser Ebene relativ zueinander vibrierend bewegt werden, wobei nur der an die Fügeebene grenzende Werkstoff aufgrund der umgesetzten Reibungsenergie die erforderliche Schweißtemperatur erreicht. Vibrationsreibschweißverfahren können zum Verbinden thermoplastischer Kunststoffe und metallischer Werkstoffe sowie von Kombinationen derartiger Stoffe verwendet werden. Aus den vorstehenden Gründen ist dem beweglich gehaltenen Teil mindestens im Verhältnis zu einem der beiden Gehäuseteile eine der Vibrationsbewegung entsprechende Ausweichbewegung gestattet.

Davon ausgehend liegt der Erfindung die **Aufgabe** zugrunde, ein Verfahren zur Herstellung von Kugelgelenken zu schaffen, das insbesondere einen verbesserten Ausgleich von Fertigungstoleranzen und eine verbesserte Einstellung der Vorspannung der Lagerschale ermöglicht, wobei das Kugelgelenk praktisch unveränderliche Betriebseigenschaften aufweist.

Diese Aufgabe wird erfindungsgemäß dadurch gelöst, daß das endgültige Übermaß der Lagerschale durch plastische Verformung mittels Schwingungsenergie eingestellt wird, die von einer einen Druck auf die Lagerschale ausübenden Sonotrode einer Ultraschall-Anlage für die Kunststoffverarbeitung in die Lagerschale eingeleitet wird.

Mit der Erfindung wird also das endgültige Übermaß der Lagerschale bei der Montage des Kugelgelenkes eingestellt, indem die Lagerschale mittels Schwingungsenergie im Ultraschallbereich plastisch verformt wird. Da die Verformung bei auf dem Kugelkopf aufgesetzter und in das Gelenkgehäuse eingesetzter Lagerschale erfolgt, werden die Fertigungstoleranzen von Lagerschale, Kugelkopf und Gelenkgehäuse unmittelbar berücksichtigt. Durch das endgültige Übermaß der zwischen Gelenkgehäuse und Kugelkopf eingesetzten Lagerschale wird die Vorspannung des Kugelkopfes festgelegt, so daß die Fertigungstoleranzen von Lagerschale, Gelenkgehäuse und Kugelkopf keinen Einfluß auf die Gelenkvorspannung haben.

Vorteilhaft ist es hierbei, wenn der Kugelzapfen gleichzeitig entsprechend seiner betrieblichen Bewegungsmöglichkeiten gedreht und gekippt wird, so daß Unregelmäßigkeiten der Kugelkopfoberfläche bei der Einstellung des endgültigen Übermaßes berücksichtigt werden. Ferner kann die Lagerschale durchaus zweiteilig ausgebildet sein und sich die plastische Verformung mittels Schwingungsenergie auf eine Lagerschalenhälfte beschränken. Ein erfindungsgemäßes Verfahren hat den **Vorteil,** daß es auf herkömmliche Lagerschalen ohne winzige Erhebungen anwendbar ist, die auch unter hohen Betriebsbelastungen praktisch unverformt bleiben und ihre Betriebseigenschaften beibehalten. Die hohe Schwingungsenergie der mit Frequenzen über 20 kHz betriebenen Ultraschall-Anlage ermöglicht nämlich ein vollständiges Erwärmen der Lagerschale mit einer einhergehenden gleichmäßigen plastischen Verformung. Demzufolge können auch erhebliche Fertigungstoleranzen durch Auswahl der den Plastifizierungsvorgang beeinflussenden Parameter ausgeglichen werden und ist insbesondere das Gelenkgehäuse mit nur geringer Maßhaltigkeit und ohne Nachbearbeitung der Gehäuseaufnahme herstellbar, zumal das endgültige Übermaß in beliebigen Raumrichtungen eingestellt werden kann und nicht nur in Zapfenachsrichtung. Die erfindungsgemäß vorgespannten Lagerschalen weisen überdies einen gleichmäßigen Spannungszustand auf und sind deshalb vor lokalen Spannungsspitzen und plastischen Verformungen geschützt.

Bei einer Ausgestaltung der Erfindung kann die plastische Verformung auch bei auf der Lagerschale aufgesetztem Verschlußteil zum Festlegen der Lagerschale im Gelenkgehäuse erfolgen, wodurch auch Toleranzen des Verschlußteiles ausgeglichen werden. Das Verschlußteil kann sowohl ein Gehäusedeckel, als auch ein im Öffnungsbereich für den Kugel-zapfen angeordneter Spannring für die Lagerschale sein. Diese Verformungen können allein und in beliebiger Kombination erfolgen, wobei sie gleichzeitig oder nacheinander durchgeführt werden können.

Besonders vorteilhaft ist es, wenn die plastische Verformung bei auf der Lagerschale aufgesetztem Verschlußteil und auf dem Verschlußteil aufgesetzter Sonotrode erfolgt, weil dann die Schwingungsenergie gleichmäßig in die Lagerschale eingeleitet wird und es keiner besonderen Anpassung der Elektrode an die Lagerschalenoberfläche bedarf. Funktionsbedingt weist nämlich das Verschlußteil bereits die erforderliche Anpassung an die Lagerschale auf.

Bei einer weiteren Ausgestaltung ist das endgültige Übermaß eingestellt, wenn das Verschlußteil bei in der Lagerschale eingesetztem Kugelkopf und in dem Gelenkgehäuse vormontierter Lagerschale auf einer Gehäuseschulter aufsitzt. Dann ist die plastische Verformung der Lagerschale im wesentlichen abgeschlossen, weil die Schwingungsenergie hauptsächlich in das Gelenkgehäuse abgeleitet wird. Die hierbei erreichte Vorspannung der Lagerschale wird insbesondere durch den Druck bestimmt, so daß Fertigungstoleranzen praktisch keinen Einfluß auf die Betriebseigenschaften des Kugelgelenkes haben. Wenn das Verschlußteil durch Einwalzen eines Walzrandes auf der Gehäuseschulter festgelegt wird, bevor der Druck der Sonotrode abgebaut und diese zurückgezogen wird, werden die Teile des Kugelgelenkes in ihrer für die Einstellung des endgültigen Übermaßes maßgeblichen Lage gegeneinander fixiert. Hieraus resultieren besonders toleranzarme Kugelgelenke.

Bei einer weiteren Ausgestaltung wird das Verschlußteil durch Einwalzen eines Walzrandes unter Vorspannung der Lagerschale in einer umlaufenden Nut des Gelenkgehäuses festgelegt und danach das endgültige Übermaß eingestellt, wobei das ein axiales Spiel in der Nut aufweisende Verschlußteil unter dem Druck der Sonotrode in Richtung der Lagerschale bewegt wird. Das Spiel des Verschlußteiles in der Nut erlaubt eine plastische Verformung der Lagerschale in axialer Richtung, wodurch die beim Einwalzen des Walzrandes erzeugte Vorspannung der Lagerschale teilweise abgebaut werden kann. Dabei ist vorteilhaft, daß die Vorspannung und somit die Betriebseigenschaften des Kugelgelenkes gezielt nachkorrigiert werden können. Messungen der nachkorrigierten Betriebskennwerte können Grundlage für eine weitere Nachkorrektur sein und ermöglichen sehr engtolerierte Kugelgelenke.

Schließlich ist bei einer Ausgestaltung des Verfahrens vorgesehen, daß das endgültige Übermaß durch ganze oder teilweise plastische Verformung mindestens einer verschlußseitig angeordneten Erhebung eingestellt wird, wobei zur plastischen Verformung der Lagerschale geringere Schwingungsenergien und kürzere Fertigungszeiten erforderlich sind. Die Erhebungen können so bemessen werden, daß sie bei den üblicherweise auftretenden betrieblichen Belastungen keiner plastischen Verformung unterliegen.

Weitere Einzelheiten und Vorteile des Gegenstandes der Erfindung ergeben sich aus der nachfolgenden Beschreibung der zugehörigen Zeichnungen, die drei Varianten eines erfindungsgemäßen Verfahrens zeigen. In den Zeichnungen zeigen:
- Fig. 1: Ein vormontiertes Kugelgelenk mit auf einem Gehäusedeckel aufgesetzter Sonotrode vor der plastischen Verformung im Längsschnitt;
- Fig. 2: Gehäusedeckel und Gehäuseschulter des Kugelgelenkes gem. Fig. 1 in vergrößerter Detaildarstellung;
- Fig. 3: dasselbe Kugelgelenk am Ende der plastischen Verformung im Längsschnitt;
- Fig. 4: Gehäusedeckel und Gehäuseschulter des Kugelgelenkes gem. Fig. 3 in vergrößerter Detaildarstellung;
- Fig. 5: vormontiertes Kugelgelenk mit verschlußseitigen Erhebungen der Lagerschale und auf einem Gehäusedeckel aufgesetzter Sonotrode vor der plastischen Verformung im Längsschnitt;
- Fig. 6: Gehäusedeckel und Gehäuseschulter des Kugelgelenkes gem. Fig. 5 in vergrößerter Detaildarstellung;
- Fig. 7: dasselbe Kugelgelenk am Ende der plastischen Verformung im Längsschnitt;
- Fig. 8: Gehäusedeckel und Gehäuseschulter des Kugelgelenkes gem. Fig. 7 in vergrößerter Detaildarstellung;
- Fig. 9: vormontiertes Kugelgelenk mit auf einem Spannring aufgesetzter Sonotrode vor der plastischen Verformung im Längsschnitt;
- Fig. 10: Spannring, Lagerschale und Gelenkgehäuse des Kugelgelenkes gem. Fig. 9 in vergrößerter Detaildarstellung;
- Fig. 11: dasselbe Kugelgelenk am Ende der plastischen Verformung im Längsschnitt;
- Fig. 12: Spannring, Lagerschale und Gelenkgehäuse des Kugelgelenkes gem. Fig. 11 in vergrößerter Detaildarstellung.

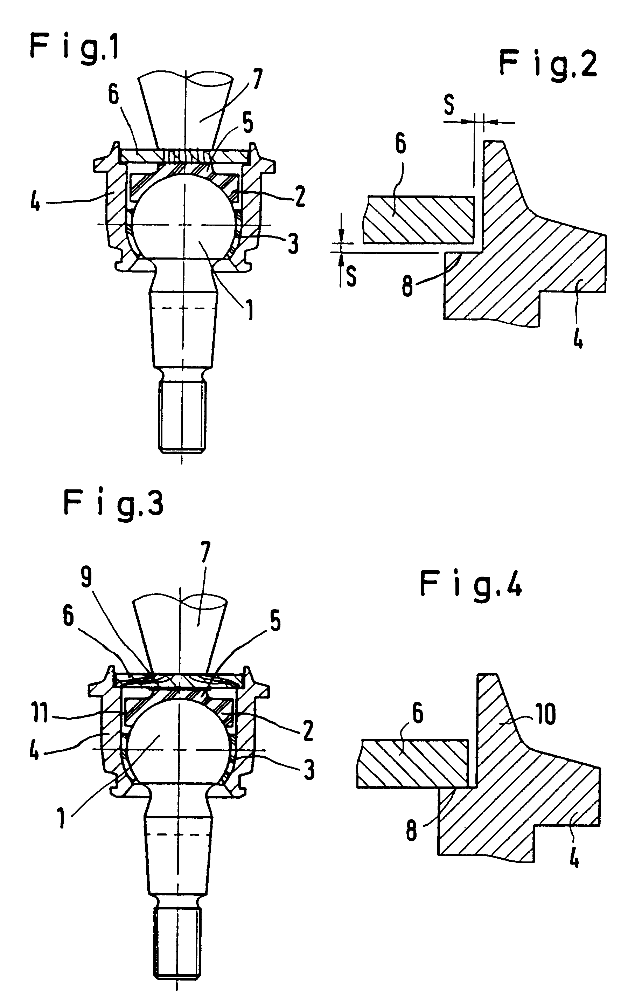

Die Fig. 1 zeigt ein vormontiertes Kugelgelenk aus einem Kugelkopf 1, der unter Zwischenlage einer inneren Lagerschale 2 und einer äußeren Lagerschale 3 in ein Gelenkgehäuse 4 eingesetzt ist. Die inneren und äußeren Lagerschalen 2,3 bilden gemeinsam eine sphärische Lagerfläche für den Kugelkopf 1, welche diesen beidseitig des Äquators abstützt. Das Material der äußeren Lagerschale 3 kann insbesondere im Hinblick auf die erwünschten Gleiteigenschaften ausgesucht werden, wogegen die Materialwahl für die innere Lagerschale 2 im wesentlichen von den erwünschten plastischen Verformungseigenschaften abhängt. Im Hinblick auf das erfindungsgemäße Verfahren kommen vornehmlich Thermoplaste für die innere Lagerschale 2 in Betracht.

Die innere Lagerschale 2 hat verschlußseitig einen zylindrischen Verformungsbereich 5, auf dem ein Gehäusedeckel 6 aufsitzt. Auf den Gehäusedeckel 6 ist wiederum eine Sonotrode 7 einer Ultraschall-Anlage für die Kunststoffverarbeitung aufgesetzt. Die Schwingungsenergie der Sonotrode 7 wird durch den Gehäusedeckel 6 über den Verformungsbereich 5 in die innere Lagerschale 2 eingeleitet.

Wie die Fig. 2 zeigt, ist hierzu ein Spalt S zwischen Gehäusedeckel 6 und einer Gehäuseschulter 8 des Gelenkgehäuses 4 ausgebildet, der verhindert, daß die Schwingungsenergie von der Sonotrode 7 über den Gehäusedeckel 6 vorzeitig in das Gelenkgehäuse 4 eingeleitet wird und keine Verformung der inneren Lagerschale 2 bewirkt. Wesentlich ist dabei, daß der Spalt S in der axialen Verformungsrichtung der inneren Lagerschale 2 ausgebildet ist, wogegen in Radialrichtung des Gehäusedeckels ein nur kleiner Spalt S genügt.

Wie die Fig. 3 zeigt, ist am Ende der plastischen Verformung der inneren Lagerschale 2 im wesentlichen der Stirnbereich 9 des Verformungsbereiches 5 abgeschmolzen, was durch eine dick ausgezogene Linie kenntlich gemacht ist. Diese bevorzugte Verformung ist durch die erhöhte Energiedichte im Verformungsbereich 5 bedingt.

Am dargestellten Ende der plastischen Verformung wird jedoch die Schwingungsenergie über den Gehäusedeckel 6 in das Gelenkgehäuse 4 und von diesem in eine nicht dargestellte Auflage für das Kugelgelenk eingeleitet. Die Fig. 4 zeigt, daß der beschriebene Energiefluß durch die Auflage des Gehäusedeckels 6 auf der Gehäuseschulter 8 des Gelenkgehäuses 4 ermöglicht wird.

Die Vorspannung der Lagerschale 2 wird maßgeblich durch den Druck der Sonotrode 7 bestimmt und kann durch Einwalzen eines Walzrandes 10 des Gelenkgehäuses 4 festgelegt werden. Fertigungstoleranzen des Kugelkopfes 1, der Lagerschalen 2,3, des Gelenkgehäuses 4 und des Gehäusedeckels 6 werden durch die plastische Verformung der inneren Lagerschale 2 ausgeglichen. Durch einen Ringspalt 11 zwischen innerer Lagerschale 2 und Gelenkgehäuse 4 ist dies bei einer im wesentlichen axiale Verformung der inneren Lagerschale 2 möglich.

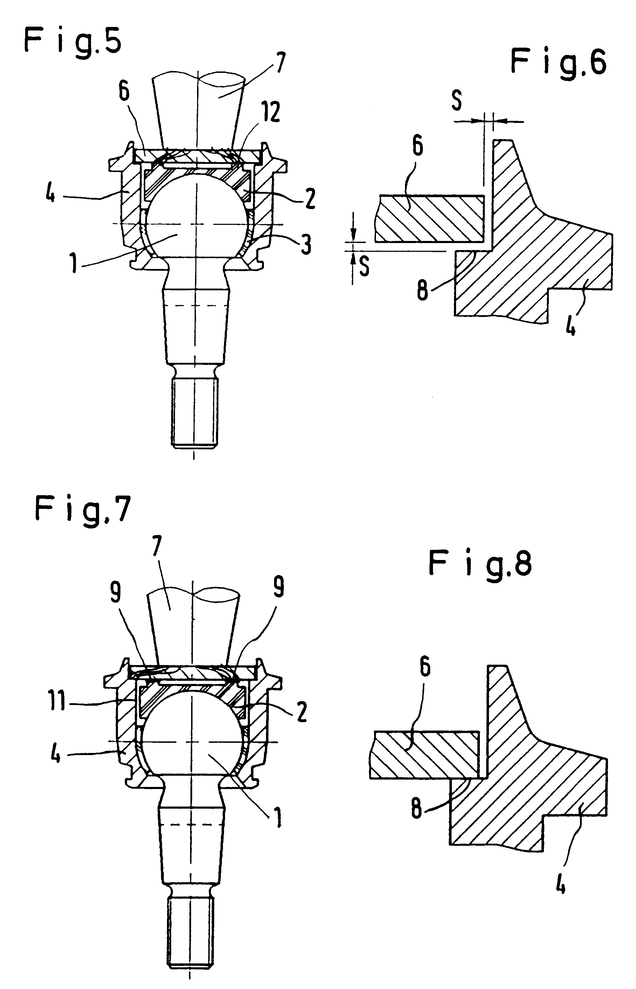

Bei dem in den Fig. 5 bis 8 dargestellten Verfahren wird durch die Schwingungsenergie der Sonotrode 7 vornehmlich eine verschlußseitig angeordnete Erhebung 12 der inneren Lagerschale 2 verformt, in der eine erhöhte Energiedichte auftritt. Hierdurch kann die zur Verformung erforderliche Energie und auch die Bearbeitungszeit vermindert werden. Die Verformung erfolgt im wesentlichen bis der in der Fig. 6 gezeigte axiale Spalt S zwischen Gehäusedeckel 6 und Gehäuseschulter 8 geschlossen ist. Dann sind insbesondere die Stirnbereiche 9 der Erhebung 12 plastisch verformt, wodurch Fertigungstoleranzen in der erwünschten Weise ausgeglichen werden.

Im dargestellten Beispiel ist die Erhebung 12 ein umlaufender Ringspalt, dessen Abmessungen so gewählt sind, daß er auch bei hohen Stoßbelastungen des Kugelzapfens keinen plastischen Verformungen unterliegt.

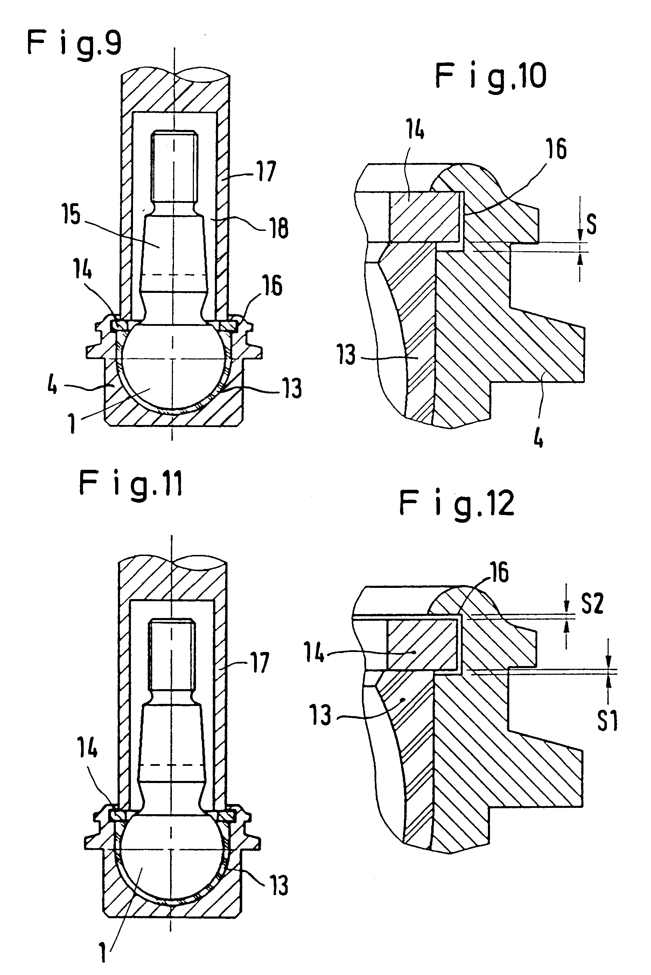

Die Fig. 9 zeigt ein Kugelgelenk, dessen Kugelkopf 1 in eine einteilige Lagerschale 13 eingesetzt ist, die von einem Spannring 14 im Gelenkgehäuse 4 gehalten wird. Der Spannring 14 ist nahe der Öffnung des Gelenkgehäuses 4 für einen Gelenkzapfen 15 in eine Nut 16 des Gelenkgehäuses eingesetzt. Eine auf dem Spannring 14 aufsitzende Sonotrode 17 weist einen Hohlraum 18 für den Gelenkzapfen 15 auf.

Die Lagerschale 13 ist unter Vorspannung im Gelenkgehäuse 4 festgelegt, wobei die Vorspannung des Kugelkopfes 1 zunächst durch Fertigungstoleranzen erheblich beeinflußt sein kann. Wie in der Fig. 10 dargestellt ist, ist jedoch der Spannring 14 mit einem Spiel in die Nut 16 eingesetzt, so daß insbesondere in axialer Richtung des Kugelgelenkes ein Spalt 5 existiert. Dieser Spalt S ermöglicht jedoch eine axiale Bewegung des Spannringes 14 unter dem Druck der Sonotrode 17 und unter gleichzeitiger plastischer Verformung der Lagerschale 13, bis der in den Fig. 11 und 12 dargestellte Zustand mit den Seitenspalten S₁ und S₂ zwischen Spannring 14 und Nut 16 erreicht ist. Der Spalt S₁ kann auch bis auf den Wert O verringert werden, wobei der Spannring 14 auf der unteren Seitenwand der Nut 16 aufsitzt.

Mit der axialen Verschiebung des Spannringes 14 ist eine plastische Verformung der Lagerschale 13 verbunden, die den erwünschten Ausgleich der Fertigungstoleranzen ermöglicht. Beim Erreichen des Seitenspaltes S₁ ist jedoch die Vorspannung der Lagerschale 13 noch so groß, daß sie den Spannring 14 in seine Ausgangslage an der oberen Seitenwand der Nut 16 unter Ausbildung des Spaltes S drücken kann und daß hiernach die gewünschte Vorspannung auf den Kugelkopf 1 ausgeübt wird.

## Patentansprüche

1. Verfahren zum Herstellen von Kugelgelenken, bei dem zwischen einem Kugelkopf (1) und einem Gelenkgehäuse (4) bzw. Verschlußteil (6,14) eine ein Übermaß aufweisende Lagerschale (2,13) aus einem thermoplastischen Kunststoff elastisch vorgespannt wird, und bei dem ein unmittelbar nach der Herstellung der Lagerschale (2,13) vorhandenes ursprüngliches Übermaß zum Ausgleich von Maßtoleranzen bei auf dem Kugelkopf (1) aufsitzender und in das Gelenkgehäuse (4) eingesetzter Lagerschale (2,13) in ein endgültiges Übermaß für den Zusammenbau des Kugelgelenkes geändert wird,
**dadurch gekennzeichnet,**
daß das endgültige Übermaß der Lagerschale (2,13) durch plastische Verformung mittels Schwingungsenergie eingestellt wird, die von einer einen Druck auf die Lagerschale (2,13) ausübenden Sonotrode (7) einer Ultraschall-Anlage für die Kunststoffverarbeitung in die Lagerschale (2,13) eingeleitet wird.

2. Verfahren nach Anspruch 1, dadurch gekennzeichnet, daß die plastische Verformung bei auf der Lagerschale (3,13) aufgesetztem Verschlußteil (6,14) zum Festlegen im Gelenkgehäuse (4) erfolgt.

3. Verfahren nach Anspruch 2, dadurch gekennzeichnet, daß die plastische Verformung bei auf der Lagerschale (2,13) aufgesetztem Verschlußteil (6,14) und auf dem Verschlußteil (6,14) aufgesetzter Sonotrode (7) erfolgt.

4. Verfahren nach den Ansprüchen 1 bis 3, dadurch gekennzeichnet, daß das endgültige Übermaß eingestellt ist, wenn das Verschlußteil (6,14) auf einer Gehäuseschulter (8,16) aufsitzt.

5. Verfahren nach Anspruch 4, dadurch gekennzeichnet, daß das Verschlußteil (6) durch Einwalzen eines Walzrandes (10) auf der Gehäuseschulter (8) festgelegt wird, bevor der Druck der Sonotrode (7) abgebaut und diese zurückgezogen wird.

6. Verfahren nach den Ansprüchen 1 bis 3 oder nach Anspruch 4, dadurch gekennzeichnet, daß das Verschlußteil (14) durch Einwalzen eines Walzrandes unter Vorspannung der Lagerschale (13) in einer umlaufenden Nut (16) des Gelenkgehäuses (4) festgelegt wird, und daß danach das endgültige Übermaß eingestellt wird, wobei das ein axiales Spiel in der Nut (16) aufweisende Verschlußteil (14) unter dem Druck der Sonotrode (7) in Richtung der Lagerschale (13) bewegt wird.

7. Verfahren nach einem der Ansprüche 1 bis 6, dadurch gekennzeichnet, daß das endgültige Übermaß durch plastische Verformung mindestens einer verschlußseitig angeordneten Erhebung (12) der Lagerschale (2) eingestellt wird.

## Claims

1. Process for the production of ball joints, in which a bearing shell (2,13) having an oversize and made of thermoplastic is prestressed elastically between a ball head (1) and a joint housing (4) or closing part (6,14), and in which an original oversize, present immediately after the production of the bearing shell (2,13), is changed into a final oversize for the assembly of the ball joint, in order to compensate dimensional tolerances in the bearing shell (2,13) sitting on the ball head (1) and inserted into the joint housing (4), characterized in that the final oversize of the bearing shell (2,13) is set by plastic deformation by means of vibration energy which is introduced into the bearing shell (2,13) by a sonotrode (7) exerting pressure on the bearing shell (2,13) and belonging to an ultrasonic apparatus for plastic processing.

2. Process according to Claim 1, characterized in that the plastic deformation takes place with the closing part (6,14) seated on the bearing shell (3,13), for fixing in the joint housing (4).

3. Process according to Claim 2, characterized in that the plastic deformation takes place with the closing part (6,14) seated on the bearing shell (2,13) and with the sonotrode (7) seated on the closing part (6,14).

4. Process according to Claims 1 to 3, characterized in that the final oversize is set when the closing part (6,14) is seated on a housing shoulder (8,16).

5. Process according to Claim 4, characterized in that the closing part (6) is fixed on the housing shoulder (8) as a result of the rolling-in of a rolling edge (10), before the pressure of the sonotrode (7) is reduced and the latter is withdrawn.

6. Process according to Claims 1 to 3 or according to Claim 4, characterized in that the closing part (14) is fixed in a continuous groove (16) of the joint housing (4) as a result of the rolling-in of a rolling edge under the prestress of the bearing shell (13), and in that the final oversize is set thereafter, whilst the closing part (14) having an axial play in the groove (16) is moved in the direction of the bearing shell (13) under the pressure of the sonotrode (7).

7. Process according to one of Claims 1 to 6, characterized in that the final oversize is set as a result of the plastic deformation of at least one elevation (12) of the bearing shell (2), the said elevation being arranged on the closing side.

## Revendications

1. Procédé de fabrication de joints à rotule dans lequel une coque de palier (2, 13) en matière thermoplastique, présentant une surcote, est élastiquement précontrainte entre une tête de rotule (1) et une boîte (4) du joint ou élément de fermeture (6, 14), et dans lequel une surcote initiale, existant aussitôt après fabrication de la coque de palier (2, 13), est modifiée en une surcote définitive pour l'assemblage du joint à rotule, afin de compenser des tolérances de cote lorsque la coque de palier (2, 13) est placée sur la tête de rotule (1) et insérée dans la boîte (4) du joint, caractérisé en ce que la surcote définitive de la coque de palier (2, 13) est réglée par déformation plastique au moyen d'une énergie d'oscillation, qui est envoyée dans la coque de palier (2, 13) par une sonotrode (7) d'une installation à ultrasons pour le traitement des matières plastiques, exerçant une pression sur la coque de palier (2, 13).

2. Procédé selon la revendication 1, caractérisé en ce que la déformation plastique s'effectue lorsque l'élément de fermeture (6, 14) est placé sur la coque de palier (3, 13) afin de le fixer dans la boîte (4) du joint.

3. Procédé selon la revendication 2, caractérisé en ce que la déformation plastique s'effectue lorsque l'élément de fermeture (6, 14) est placé sur la coque de palier (2, 13) et la sonotrode (7) est placée sur l'élément de fermeture (6, 14).

4. Procédé selon les revendications 1 à 3, caractérisé en ce que la surcote définitive est réglée lorsque l'élément de fermeture (6, 14) repose sur un épaulement (8, 16) de la boîte.

5. Procédé selon la revendication 4, caractérisé en ce que l'élément de fermeture (6) est fixé par laminage d'un bord de laminage (10) sur l'épaulement (8) de la boîte, avant que la pression de la sonotrode (7) soit supprimée et que celle-ci soit retirée.

6. Procédé selon les revendication 1 à 3 ou selon la revendication 4, caractérisé en ce que l'élément de fermeture (14) est fixé par laminage d'un bord de laminage sous précontrainte de la coque de palier, dans une rainure continue (16) de la boîte (4) du joint et en ce qu'ensuite, la surcote définitive est réglée, l'élément de fermeture (14) présentant un jeu axial dans la rainure (16) étant déplacé sous l'effet de la pression de la sonotrode (7), en direction de la coque de palier (13).

7. Procédé selon l'une des revendications 1 à 6, caractérisé en ce que la surcote définitive est réglée par une déformation plastique d'au moins un relief (12), situé côté fermeture, de la coque de palier (2).
